(19) Europäisches Patentamt / European Patent Office / Office européen des brevets

(11) **EP 4 535 706 A1**

(12) **EUROPEAN PATENT APPLICATION**

(43) Date of publication:
**09.04.2025 Bulletin 2025/15**

(21) Application number: **24203371.0**

(22) Date of filing: **27.09.2024**

(51) International Patent Classification (IPC):
*H04L 5/00* (2006.01)   *H04L 5/14* (2006.01)

(52) Cooperative Patent Classification (CPC):
H04L 5/0042; H04L 5/0044; H04L 5/0055;
H04L 5/0064; H04L 5/0098; H04L 5/1469;
H04L 5/001

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.10.2023  US 202363542778 P
16.09.2024  US 202418885769**

(71) Applicant: **Acer Incorporated
New Taipei City 221 (TW)**

(72) Inventors:
• **Lee, Chien-Min
221 New Taipei City (TW)**
• **Chen, Jen-Hsien
221 New Taipei City (TW)**
• **Lo, Li-Chung
221 New Taipei City (TW)**

(74) Representative: **Straus, Alexander
2K Patentanwälte - München
Bajuwarenring 14
82041 Oberhaching (DE)**

(54) **METHOD AND COMMUNICATION DEVICE FOR HANDLING A COMMUNICATION WITH A SERVING CELL**

(57)   A method for handling a communication with a serving cell of a communication device (14, 20) includes: receiving a first configuration, wherein the first configuration indicates a set of downlink symbols, a set of flexible symbols and/or a set of uplink symbols (302); receiving a second configuration for the serving cell, wherein the second configuration indicates a set of special symbols in the set of downlink symbols and/or the set of flexible symbols, and the set of special symbols comprises downlink sub-band(s) and uplink sub-band(s) (304); receiving an indicator for a uplink transmission in a bandwidth part of the serving cell (306); performing the uplink transmission according to a first resource configuration, in response to the uplink transmission overlapping with a uplink symbol (308); and determining whether to perform the uplink transmission, in response to the uplink transmission overlapping with a special symbol (310).

Start — 300

Receive a first configuration from a network, wherein the first configuration indicates at least one of a set of DL symbols, a set of flexible symbols, and a set of UL symbols in a time period — 302

Receive a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell — 304

Receive an indicator for a first UL transmission in a BWP of the serving cell from the network, wherein the first UL transmission corresponds to a first priority index — 306

Perform the first UL transmission according to a first resource configuration, in response to the first UL transmission overlapping with a UL symbol in the set of UL symbols — 308

Determine whether to perform the first UL transmission, in response to the first UL transmission overlapping with a special symbol in the set of special symbols in time — 310

End — 312

FIG. 3

EP 4 535 706 A1

## Description

Field of the Invention

The present invention is related to methods and a communication device used in a wireless communication system, and more particularly, to methods and a communication device for handling a communication with a serving cell.

Background of the Invention

A long-term evolution (LTE) system supporting the 3rd Generation Partnership Project (3GPP) Rel-8 standard and/or the 3GPP Rel-9 standard is developed by the 3GPP as a successor of the universal mobile telecommunication system (UMTS) for further enhancing performance of the UMTS to satisfy increasing needs of users.

An LTE-advanced (LTE-A) system, as its name implies, is an evolution of the LTE system. The LTE-A system targets faster switching between power states, improves performance at the coverage edge of an evolved Node-B (eNB), increases peak data rate and throughput, and includes advanced techniques, such as carrier aggregation (CA), uplink (UL) multiple-input multiple-output (UL-MIMO), etc.

A next generation radio access network (NG-RAN) supporting the 3GPP Rel-15 standard - 3GPP Rel-19 standard is developed for further enhancing the LTE-A system. The NG-RAN includes one or more next generation Node-Bs (gNBs), and has properties of wider operation bands, different numerologies for different frequency ranges, massive MIMO, advanced channel codings, etc.

As a demand for a use of a communication device increases, the amount of signals (e.g., data, messages and/or packets) communicated between the communication device and a network also increases. Current transmission resources in a serving cell are insufficient to communicate the signals. Therefore, how to handle a communication between the communication device and the network with the serving cell to improve efficiency with limited transmission resources in the serving cell (e.g., enhance a UL coverage and/or reduce a transmission latency) is an important problem to be solved.

Summary of the Invention

This in mind, the present invention aims at providing methods and a communication device for handling a communication with a serving cell to solve the abovementioned problem.

This is achieved by methods and a communication device for handling a communication with a serving cell according to the independent claims, respectively. The dependent claims pertain to corresponding further developments and improvements.

As will be seen more clearly from the detailed description following below, a claimed method for handling a communication with a serving cell of a communication device comprises: receiving a first configuration from a network, wherein the first configuration indicates at least one of a set of downlink (DL) symbols, a set of flexible symbols, and a set of uplink (LTL) symbols in a time period; receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell; receiving an indicator for a first UL transmission in a bandwidth part (BWP) of the serving cell from the network, wherein the first UL transmission corresponds to a first priority index; performing the first UL transmission according to a first resource configuration, in response to the first UL transmission overlapping with a UL symbol in the set of UL symbols; and determining whether to perform the first UL transmission, in response to the first UL transmission overlapping with a special symbol in the set of special symbols in time.

A claimed communication device for handling a communication with a serving cell comprises: at least one storage device; and at least one processing circuit, coupled to the at least one storage device, wherein the at least one storage device is configured to store instructions, and the at least one processing circuit is configured to execute the instructions of: receiving a first configuration from a network, wherein the first configuration indicates at least one of a set of downlink (DL) symbols, a set of flexible symbols, and a set of uplink (UL) symbols in a time period; receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell; receiving an indicator for a first UL transmission in a bandwidth part (BWP) of the serving cell from the network, wherein the first UL transmission corresponds to a first priority index; performing the first UL transmission according to a first resource configuration, in response to the first UL transmission overlapping with a UL symbol in the set of UL symbols; and determining whether to perform the first UL transmission, in response to the first UL transmission overlapping with a special symbol in the set of special symbols in time.

A claimed method for a network handling a communication with a communication device comprises: transmitting a first configuration to the communication device, wherein the first configuration indicates at least one of a set of downlink (DL) symbols, a set of flexible symbols, and a set of uplink (UL) symbols in a time period; transmitting a second configuration for the serving cell to the communication device, wherein the second configuration indicates a set of special symbols in at least one of the set of DL symbols and the set of flexible symbols, and the set of special symbols comprises at least one DL sub-band and at least one UL sub-band in different frequency regions of the serving cell; transmitting an indicator for a first UL transmission in a bandwidth part (BWP) of the serving cell to the communication device, wherein the first UL transmission corresponds to a first priority index; and transmitting a first resource configuration to the communication device; wherein the first resource configuration enables the communication device to perform the first UL transmission, in response to the first UL transmission overlapping with a UL symbol in the set of UL symbols.

Brief Description of the Drawings

In the following, the invention is further illustrated by way of example, taking reference to the following drawings.

FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a schematic diagram of a communication between a communication device and a network according to an example of the present invention.
FIG. 5 is a schematic diagram of a communication between a communication device and a network according to an example of the present invention.
FIG. 6 is a schematic diagram of a communication between a communication device and a network according to an example of the present invention.
FIG. 7 is a schematic diagram of a communication between a communication device and a network according to an example of the present invention.
FIG. 8 is a schematic diagram of a communication between a communication device and a network according to an example of the present invention.
FIG. 9 is a schematic diagram of two special symbols according to an example of the present invention.
FIG. 10 is a schematic diagram of a communication between a communication device and a network according to an example of the present invention.
FIG. 11 is a schematic diagram of a communication between a communication device and a network according to an example of the present invention.
FIG. 12 is a flowchart of a process according to an example of the present invention.
FIG. 13 is a flowchart of a process according to an example of the present invention.
FIG. 14 is a flowchart of a process according to an example of the present invention.

Detailed Description

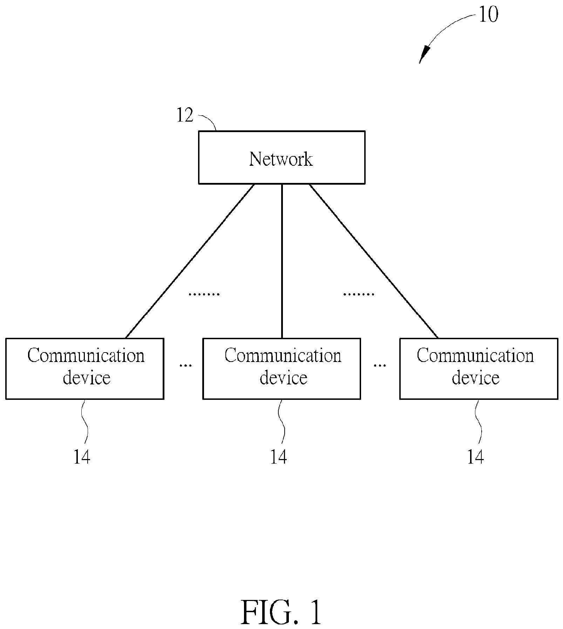

FIG. 1 is a schematic diagram of a wireless communication system 10 according to an example of the present invention. The wireless communication system 10 is briefly composed of a network 12 and a plurality of communication devices 14. The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the network 12 and a communication device 14 may communicate with each other via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the network 12 and a communication device 14 may communicate with each other via multiple serving cells (e.g., multiple serving carriers) including a primary cell (e.g., primary component carrier) and one or more secondary cells (e.g., secondary component carriers).

In FIG. 1, the network 12 and the communication devices 14 are simply utilized for illustrating the structure of the wireless communication system 10. Practically, the network 12 may be a universal terrestrial radio access network (UTRAN) including at least one Node-B (NB) in a universal mobile telecommunications system (UMTS). In one example, the network 12 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 12 may be a next generation radio access network (NG-RAN) including at least one next generation Node-B (gNB) and/or at least one fifth generation (5G) base station (BS). In one example, the gNB or the 5G BS of network 12 may include a NTN Gateway and a NTN payload. In one example, the network 12 may be any BS conforming to a specific communication standard to communicate with a communication device 14.

A new radio (NR) is a standard defined for a 5G system (or 5G network) to provide a unified air interface with better performance. gNBs are deployed to realize the 5G system, which supports advanced features such as enhanced Mobile Broadband (eMBB), Ultra Reliable Low Latency Communications (URLLC), massive Machine Type Communications (mMTC), etc. The eMBB provides broadband services with a greater bandwidth and a low/moderate latency. The URLLC provides applications (e.g., end-to-end communication) with properties of a higher reliability and a low latency. The examples of the applications include an industrial internet, smart grids, infrastructure protection, remote surgery and an intelligent transportation system (ITS). The mMTC is able to support internet-of-things (IoT) of the 5G system which include billions of connected devices and/or sensors.

Furthermore, the network 12 may also include at least one of the UTRAN/E-UTRAN/NG-RAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), Access and Mobility Management Function (AMF), Session Management Function (SMF), User Plane Function (UPF), Authentication Server Function (AUSF), etc. In one example, after the network 12 receives information transmitted by a communication device 14, the information may be processed only by the UTRAN/E-UTRAN/NG-RAN and decisions corresponding to the information are made at the UTRAN/E-UTRAN/NG-RAN. In one example, the UTRAN/E-UTRAN/NG-RAN may forward the information to the core network, and the decisions corresponding to the information are made at the core network after the core network processes the information. In one example, the information may be processed by both the UTRAN/E-UTRAN/NG-RAN and the core network, and the decisions are made after coordination and/or cooperation are performed by the UTRAN/E-UTRAN/NG-RAN and the core network.

A communication device 14 may be a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, or combination thereof. In addition, the network 12 and the communication device 14 can be seen as a transmitter or a receiver according to direction (i.e., transmission direction), e.g., for an uplink (UL), the communication device 14 is the transmitter and the network 12 is the receiver, and for a downlink (DL), the network 12 is the transmitter and the communication device 14 is the receiver.

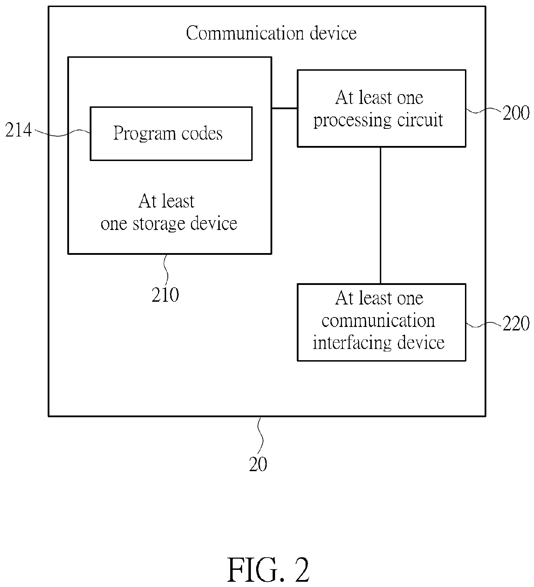

FIG. 2 is a schematic diagram of a communication device 20 according to an example of the present invention. The communication device 20 may be a communication device 14 or the network 12 shown in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

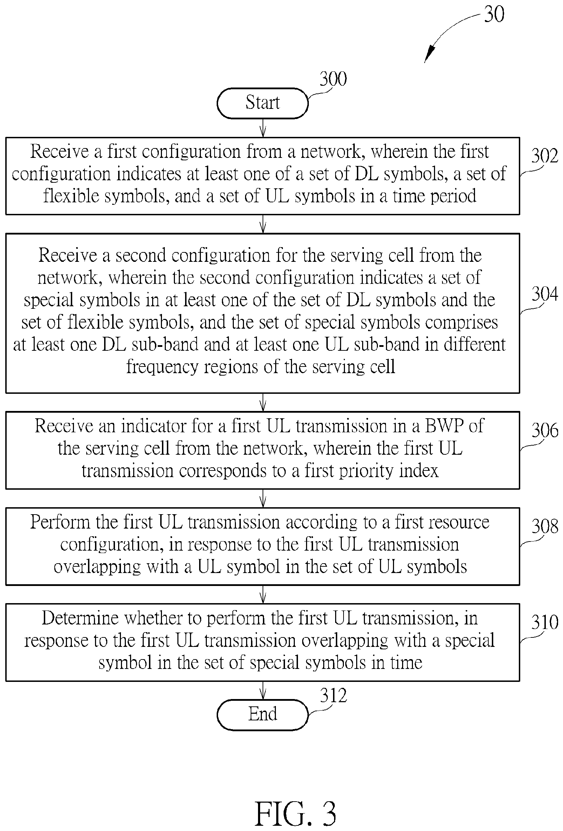

FIG. 3 is a flowchart of a process 30 according to an example of the present invention. The process 30 may be utilized in a communication device (e.g., a communication device 14 in FIG. 1 or the communication device 20 in FIG. 2), to handle a communication with a serving cell. The process 30 may be compiled into the program codes 214 and includes the following steps:

Step 300:  Start.

Step 302:  Receive a first configuration from a network, wherein the first configuration indicates at least one of a set of DL symbols, a set of flexible symbols, and a set of UL symbols in a time period.

Step 304:  Receive a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell.

Step 306:  Receive an indicator for a first UL transmission in a bandwidth part (BWP) of the serving cell from the network, wherein the first UL transmission corresponds to a first priority index.

Step 308:  Perform the first UL transmission according to a first resource configuration, in response to the first UL transmission overlapping with a UL symbol in the set of UL symbols.

(continued)

Step 310:    Determine whether to perform the first UL transmission, in response to the first UL transmission overlapping with a special symbol in the set of special symbols in time.

Step 312:    End.

According to the process 30, the communication device receives a first configuration (e.g., TDD-UL-DL-ConfigCommon) from a network. The first configuration indicates at least one of a set of DL symbols, a set of flexible symbols, and a set of UL symbols in a time period (e.g., at least one symbol or a radio frame). Then, the communication device receives a second configuration for the serving cell from the network. The second configuration indicates a set of special symbols in at least one of the set of DL symbols and the set of flexible symbols, and the set of special symbols comprises at least one DL sub-band and at least one UL sub-band in different frequency regions of the serving cell. The communication device receives an indicator for a first UL transmission in a BWP of the serving cell from the network. The first UL transmission corresponds to a first priority index. The communication device performs the first UL transmission (e.g., with the network) according to a first resource configuration, in response to the first UL transmission (e.g., fully) overlapping with a UL symbol (or at least one UL symbol) in the set of UL symbols. The communication device determines whether to perform the first UL transmission (e.g., with the network), in response to the first UL transmission (e.g., fully) overlapping with a special symbol (or at least one special symbol) in the set of special symbols in time. That is, the special symbols comprise UL resources (e.g., the at least one UL sub-band), and the first UL transmission may be performed in the UL resources of the special symbols. Thus, a UL coverage is enhanced, and a transmission latency is reduced.

Realization of the process 30 is not limited to the above description. The following examples may be applied to realize the process 30.

In one example, the first UL transmission fulfills at least one of following conditions: the first UL transmission comprises at least one of a physical UL control channel (PUCCH), a physical UL shared channel (PUSCH), a sounding reference signal (SRS), and a physical random access channel (PRACH); and the first UL transmission is indicated/configured/transmitted without at least one repetition. In one example, the indicator is received via a DL control information (DCI) or a radio resource control (RRC) signal. In one example, the first resource configuration is indicated by the indicator or a RRC signal. In one example, each sub-band of the at least one DL sub-band and the at least one UL sub-band comprises at least one physical resource block (PRB). In one example, the communication device determines types (e.g., directions) of symbols in the time period according to the first configuration. In one example, the communication device determines at least one type of at least one symbol in the time period according to the second configuration. In one example, the communication device determines the at least one type of at least one symbol in the time period according to the first configuration and the second configuration.

In one example, the BWP is a (e.g., contiguous) set of PRBs on a carrier. In one example, the communication device is configured with a plurality of BWPs (e.g., 4 BWPs). At a time point, a first BWP of the plurality of BWPs is active for UL and a second BWP of the plurality of BWPs is active for DL. In one example, one of the plurality of BWPs overlaps with the at least one DL sub-band and the at least one UL sub-band in at least one special symbol in the set of special symbols. In one example, one of the plurality of BWPs overlaps with the at least one DL sub-band or the at least one UL sub-band in the at least one special symbol in the set of special symbols. In one example, each BWP defined for a numerology has at least one of different subcarrier spacings, symbol durations, and cyclic prefix (CP) lengths.

In one example, the communication device determines whether to perform the first UL transmission (e.g., with the network) according to the first priority index of a first PUCCH comprised in the first UL transmission, in response to the first UL transmission overlapping with a special symbol in the set of special symbols in time. In one example, the communication device performs the first UL transmission (e.g., with the network) in the special symbol, in response to the first UL transmission comprising the first PUCCH with the first priority index being a first value. In one example, the communication device disables performing the first UL transmission (e.g., with the network) in the special symbol, in response to the first UL transmission comprising the first PUCCH with the first priority index being a second value. In one example, the special symbol is indicated (or treated) as a UL resource, e.g., if a first resource of the first UL transmission does not overlap with a second resource of a DL reception or the at least one DL sub-band.

In one example, the communication device determines whether to perform the first UL transmission (e.g., with the network) according to a triggering type of the indicator, in response to the first UL transmission overlapping with a special symbol in the set of special symbols in time. In one example, the communication device performs the first UL transmission (e.g., with the network) in the special symbol, in response to the indicator being indicated by a DCI. The first UL transmission comprises at least one of a PUSCH scheduled/triggered by the DCI, a PUCCH carrying a hybrid automatic repeat request acknowledgement (HARQ-ACK) scheduled/triggered by the DCI, and a SRS triggered by the DCI. In one example, the communication device disables performing the first UL transmission (e.g., with the network) in the special symbol, in response to the indicator being not indicated by the DCI. The first UL transmission comprises at least one of a SR, a channel status information (CSI), and a periodic SRS. In one example, the at least one of the SR, the CSI, and the periodic SRS is configured by a higher-layer signal (e.g., a RRC signal). In one example, the communication device performs the first UL transmission (e.g., with the network) in a non-special symbol (e.g., a UL symbol in the set of UL symbols) or the special symbol. Furthermore, the first UL transmission is performed in the non-special symbol in response to the indicator being indicated by a signal other than the DCI (e.g., a RRC signal). The first UL transmission is performed in the special symbol in response to the indicator being indicated by the DCI.

In one example, the communication device determines whether to perform the first UL transmission (e.g., with the network) according to a location of transmission resource for the first UL transmission and at least one location of the at least one DL sub-band, in response to the first UL transmission overlapping with a special symbol in the set of special symbols in time. In one example, the communication device performs the first UL transmission (e.g., with the network) in the special symbol, in response to the first UL transmission not overlapping with the at least one DL sub-band. In one example, the communication device disables performing the first UL transmission (e.g., with the network) in the special symbol, in response to the first UL transmission (e.g., fully or partially) overlapping with the at least one DL sub-band.

In one example, the communication device receives a third configuration from the network. In one example, the third configuration comprises a first power information and a second power information for the first UL transmission. In one example, the first power information and the second power information correspond to the UL symbol and the special symbol, respectively. In one example, the first power information comprises at least one first parameter (e.g., closedLoopIndex, p0-PUCCH-Id and/or PathlossReferenceRS-Id). In one example, the second power information comprises at least one second parameter (e.g., closedLoopIndex, p0-PUCCH-Id and/or PathlossReferenceRS-Id). In one example, the communication device determines a first transmission power for the first UL transmission according to the first power information, in response to the first UL transmission overlapping with the UL symbol. In one example, the communication device determines a second transmission power for the first UL transmission according to the second power information, in response to the first UL transmission overlapping with the special symbol.

In one example, the third configuration comprises a first spatial relation information and a second spatial relation information for the first UL transmission. In one example, the first spatial relation information and the second spatial relation information correspond to the UL symbol and the special symbol, respectively. In one example, the first spatial relation information comprises a first spatial relation information identity (ID). In one example, the second spatial relation information comprises a second spatial relation information ID. In one example, the first spatial relation information comprises a first reference signal (RS) (e.g., a synchronization signal block (SSB) index, a CSI-RS index or a SRS). In one example, the second spatial relation information comprises a second RS (e.g., a SSB index, a CSI-RS index or a SRS). In one example, the communication device determines a first spatial relation for the first UL transmission according to the first spatial relation information, in response to the first UL transmission overlapping with the UL symbol. In one example, the communication device determines a second spatial relation for the first UL transmission according to the second spatial relation information, in response to the first UL transmission overlapping with the special symbol.

In one example, the third configuration comprises a first code rate and a second code rate for the first UL transmission. In one example, the first code rate and the second code rate correspond to the UL symbol and the special symbol, respectively. In one example, the communication device determines a first number of PRB for the first UL transmission according to the first code rate, in response to the first UL transmission overlapping with the UL symbol. In one example, the communication device determines a second number of PRB for the first UL transmission according to the second code rate, in response to the first UL transmission overlapping with the special symbol. In one example, the communication device is configured with a power offset. In one example, the communication device performs the first UL transmission (e.g., with the network) in the special symbol according to the power offset, in response to the first UL transmission overlapping with the special symbol.

In one example, the communication device disables performing the first UL transmission (e.g., with the network) in the special symbol, in response to a second UL transmission overlapping with the first UL transmission in time. In one example, the first UL transmission comprises the first PUCCH with the first priority index being the second value, and the second UL transmission comprises a second PUCCH with a second priority index being the first value. In one example, the communication device performs the second UL transmission in the special symbol, wherein the second PUCCH comprises a first UL control information (UCI) of the first PUCCH. In one example, the communication device performs the second UL transmission in the special symbol, wherein the second PUCCH does not comprise the first UCI of the first PUCCH. In one example, the communication device multiplexes (or is configured to multiplex) the first UCI of the first PUCCH and a second UCI of the second PUCCH in a third PUCCH with a third priority index being the first value. In one example, the communication device performs a third UL transmission, e.g., in a slot comprising the special symbol, wherein the third UL transmission comprises the third PUCCH. In one example, the slot comprises a plurality of symbols (e.g., multiple continuous symbols). In one example, the communication device multiplexes (or is configured to multiplex) the first UCI of the first PUCCH and a set of UCIs of the second PUCCH in the third PUCCH with the third priority index being the first value. In one example, a multiplexing of UCIs corresponding to different PUCCHs with different priority indexes (e.g., uci-MuxWithDiffPrio) in the special symbol is not applicable in the special symbol, e.g., regardless whether the communication device is configured with the multiplexing of the UCIs corresponding to the different PUCCHs with the different priority indexes.

In one example, the first UCI of the first PUCCH comprises (e.g., is) a first HARQ-ACK. In one example, the second UCI of the second PUCCH comprises (e.g., is) a second HARQ-ACK. In one example, the set of UCIs of the second PUCCH comprises a third HARQ-ACK and a scheduling request (SR). In one example, a HARQ-ACK (e.g., the first HARQ-ACK, the second HARQ-ACK and/or the third HARQ-ACK) may be a HARQ-ACK for a semi persistent scheduling physical DL shared channel (SPS-PDSCH). In one example, at least one of the first UCI and the second UCI is a deferred UCI. That is, the special symbol is available to transmit a PUCCH (e.g., the first PUCCH, the second PUCCH or the third PUCCH) with a deferred UCI.

In one example, the communication device disables performing the first UL transmission (e.g., with the network) in the special symbol, in response to the special symbol being configured as a DL symbol in the set of DL symbols according to the first configuration. That is, the first UL transmission is not performed in a symbol, when the symbol is configured as a DL symbol according to the first configuration and is configured as a special symbol according to the second configuration. In one example, the first UL transmission fulfills at least one of following conditions: the first UL transmission corresponds to the first priority index being the second value; the first UL transmission comprises the first PUCCH carrying a (e.g., deferred) HARQ-ACK for a SPS-PDSCH; and the first UL transmission comprises the first PUCCH carrying a CSI.

In one example, the communication device performs the first UL transmission (e.g., with the network) in the special symbol, in response to the special symbol being configured as a flexible symbol in the set of flexible symbols according to the first configuration. In one example, the special symbol is indicated as a UL resource by the network. That is, the first UL transmission is performed in a slot (or a symbol) which is indicated as a UL resource, e.g., regardless of the first priority index corresponding to the first UL transmission, when the slot (or the symbol) is configured as a flexible slot (or the symbol) according to the first configuration and is configured as a special slot (or the symbol) according to the second configuration. In one example, the special slot is composed of a set (e.g., 14) of special symbols. In one example, the communication device disables performing the first UL transmission (e.g., with the network) in the special symbol, in response to the special symbol being configured as the flexible symbol according to the first configuration. In one example, the communication device disables performing the first UL transmission (e.g., with the network) in the special symbol, in response to the special symbol being configured as the flexible symbol according to the first configuration and a direction of the flexible symbol not being indicated. In one example, the direction of the flexible symbol is indicated by a DCI. That is, the direction of the flexible symbol is not indicated, when the communication device does not detect/receive the DCI.

In one example, the communication device performs the first UL transmission (e.g., with the network) in the special symbol, in response to the first UL transmission comprising a first set of UCIs. In one example, the communication device disables performing the first UL transmission (e.g., with the network) in the special symbol, in response to the first UL transmission comprising a second set of UCIs. In one example, the first set of UCIs comprises at least one of a HARQ-ACK and a SR. In one example, the first set of UCIs comprises at least one of a HARQ-ACK, a SR, a level 1 reference symbol received power (L1-RSRP), and a level 1 signal to interference plus noise ratio (L1-SINR). In one example, the second set of UCIs comprises a CSI. In one example, the second set of UCIs comprises at least one of a channel quality indicator (CQI), a precoding matrix indicator (PMI), a rank indication (RI), a L1-RSRP, and a L1-SINR. In one example, the first set of UCIs and the second set of UCIs are determined according to at least one of a predetermined rule and a higher-layer signal (e.g., a RRC signal).

In one example, the communication device performs a first DL reception (e.g., with the network) in a special symbol (different from or the same as the special symbol in the process 30) in the set of special symbols, in response to an indicator (different from the indicator in the process 30) being indicated by a DCI. The first DL reception comprises at least one of a PDSCH scheduled by the DCI and a CSI-RS triggered by the DCI. In one example, the communication device disables performing the first DL reception (e.g., with the network) in the special symbol (different from or the same as the special symbol in the process 30) in the set of special symbols, in response to the indicator (different from the indicator in the process 30) being not indicated by the DCI. The first DL reception comprises at least one of a SPS-PDSCH and a periodic CSI-RS. In one example, the communication device performs the first DL reception (e.g., with the network) in a non-special symbol (e.g., a DL symbol in the set of DL symbols) or the special symbol (different from or the same as the special symbol in the process 30). Furthermore, the first DL reception is performed in the non-special symbol in response to the indicator (different from the indicator in the process 30) being indicated by a signal other than the DCI (e.g., a RRC signal). The first DL reception is performed in the special symbol in response to the indicator (different from the indicator in the process 30) being indicated by the DCI.

In one example, the communication device performs the first UL transmission (e.g., with the network) in the special symbol, in response to the indicator being indicated by a DCI. In one example, the first UL transmission comprises at least one of a PUSCH scheduled/triggered by the DCI, a PUCCH carrying a HARQ-ACK scheduled/triggered by the DCI, and a SRS triggered by the DCI. In one example, the communication device disables performing the first UL transmission (e.g., with the network) in the special symbol, in response to the indicator being not indicated by the DCI. In one example, the first UL transmission comprises at least one of a PUCCH (e.g., carrying a SR and/or a CSI) and a periodic SRS. In one example, the first UL transmission is transmitted without at least one repetition.

In one example, the communication device performs the first UL transmission (e.g., with the network) in the special symbol, in response to the first UL transmission comprising a third set of UCIs. That is, the communication device may determine the UL resource for the first UL transmission according to the first configuration and the second configuration (e.g., if the first UL transmission comprises the third set of UCIs). In one example, the communication device disables performing the first UL transmission (e.g., with the network) in the special symbol, in response to the first UL transmission comprising a fourth set of UCIs. In one example, the third set of UCIs comprises at least one of a HARQ-ACK, a SR, a L1-RSRP, and a L1-SINR. In one example, the fourth set of UCIs comprises at least one of a CQI, a PMI, and a RI. That is, the communication device may determine the UL resource for the first UL transmission according to the first configuration (e.g., if the first UL transmission comprises the fourth set of UCIs).

In one example, the communication device performs the first DL reception (e.g., with the network) in the special symbol (different from or the same as the special symbol in the process 30) in the set of special symbols, in response to the first DL reception not overlapping with the at least one UL sub-band. In one example, the communication device disables performing the first DL reception (e.g., with the network) in the special symbol (different from or the same as the special symbol in the process 30) in the set of special symbols, in response to the first DL reception overlapping with the at least one UL sub-band.

In one example, the communication device is configured with time information. In one example, the time information indicates whether at least one resource is available for the first UL transmission. In one example, a resource of the at least one resource comprises (e.g., is) a radio frame, a slot, a special slot or a slot comprising at least one special symbol. In one example, the time information comprises (e.g., is) a bitmap. In one example, at least one bit in the bitmap corresponds to the at least one resource. In one example, a bit in the bitmap with a third value indicates that the first UL transmission is available to be performed in a corresponding resource. In one example, the bit in the bitmap with a fourth value indicates that the first UL transmission is not available to be performed in the corresponding resource. In one example, the third value is "1", but is not limited herein. In one example, the fourth value is "0", but is not limited herein. In one example, the communication device performs the first UL transmission (e.g., with the network) in the special symbol, in response to a bit in the bitmap corresponding to the special symbol being the third value. In one example, the communication device disables performing the first UL transmission (e.g., with the network) in the special symbol, in response to the bit in the bitmap corresponding to the special symbol being the fourth value. In one example, the time information is configured for at least one of the communication device, the BWP, a UL channel, and a UL signal.

In one example, the communication device determines whether to perform the first UL transmission (e.g., with the network) according to at least one of an ID of the communication device, an index of a slot which comprises the special symbol, and at least one parameter, in response to the first UL transmission overlapping with a special symbol in the set of special symbols in time. In one example, one of the at least one parameter is configured by at least one of a communication device specific, a BWP specific, and a higher-layer signal (e.g., a RRC signal). In one example, the communication device performs the first UL transmission (e.g., with the network) in the special symbol, in response to an equation (Eq1) being fulfilled. The equation (Eq1) can be expressed as follows:

$$mod(ID_{CD} + N, P) = K \qquad\qquad (Eq1)$$

wherein $ID_{CD}$ is an ID of the communication device, N is an index of a slot which comprises the special symbol, and P and K are parameters configured by at least one of a communication device specific, a BWP specific, and a higher-layer signal (e.g., a RRC signal). In one example, the communication device disables performing the first UL transmission (e.g., with the network) in the special symbol, in response to the equation (Eq1) not being fulfilled. That is, whether a UL transmission is transmitted in the special symbol is determined according to time domain information.

In one example, the communication device does not expect to perform the first UL transmission with the first priority index being the second value in the special symbol, in response to the indicator being indicated by a DCI. In one example, the communication device does not expect that the first UL transmission with the first priority index being the first value overlaps with the at least one DL sub-band, in response to the indicator being indicated by a DCI. In one example, a HARQ-ACK comprised in the first UL transmission is dropped, in response to the first UL transmission overlapping with the special symbol or the at least one DL sub-band. In one example, the communication device transmits the dropped HARQ-ACK in a first slot after the special symbol, when the network triggers a HARQ-ACK feedback (e.g., type-3 HARQ-ACK feedback) or configures a HARQ-ACK deferring. In one example, the first slot is selected by the network via the DCI. In one example, a slot (e.g., the first slot) comprises a plurality of symbols (e.g., multiple continuous symbols).

In one example, the first DL reception has a lower priority than or a same priority as the first UL transmission with the first priority index being the second value. In one example, the first DL reception comprises a RS (e.g., a CSI-RS or a positioning reference signal (PRS)). In one example, the first DL reception corresponds to a first search space (SS) set. The first SS set comprises at least one of a common SS (CSS) set (e.g., Type3-PDCCH CSS set) and a UE specific SS (USS) set. In one example, the first DL reception comprises a PDSCH scheduled by a DCI from the first SS set.

In one example, the first DL reception has a higher priority than or a same priority as the first UL transmission with the first priority index being the first value. In one example, the first DL reception corresponds to a second SS set. The second SS set comprises at least one CSS set. The at least one CSS set comprises at least one of a Type0-PDCCH CSS set, a Type1-PDCCH CSS set, a Type2-PDCCH CSS set, a 0A-PDCCH CSS set, a 0B-PDCCH CSS set, a 1A-PDCCH CSS set, and a 2A-PDCCH CSS set. In one example, the first DL reception comprises a PDSCH scheduled by a DCI from the second SS set. In one example, the DL reception comprises a synchronization signal and physical broadcast channel (SS/PBCH) block.

In one example, the first DL reception comprising a PDSCH has a higher priority than a second DL reception, in response to the first UL transmission with the first priority index being the first value comprising a HARQ-ACK corresponding to the PDSCH. In one example, the first DL reception comprising the PDSCH has a lower priority than the second DL reception, in response to the first UL transmission with the first priority index being the second value comprising the HARQ-ACK corresponding to the PDSCH.

In one example, the communication device determines a UL resource (e.g., in the at least one UL sub-band) according to at least one of the first resource configuration and a starting PRB. In one example, the communication device performs the first UL transmission (or the second/third UL transmission) (e.g., with the network) on the UL resource in the special symbol. The first UL transmission corresponds to the first priority index being the first value or the second value. In one example, a first number of PRB of the UL resource is the same as a second number of PRB for the first UL transmission overlapping with the UL symbol in the set of UL symbols. In one example, the starting PRB is determined according to at least one of an offset, the indicator, the first resource configuration, a DCI, and a higher-layer signal (e.g., a RRC signal). In one example, the offset indicates a set of frequency domain resource (e.g., a number of at least one PRB). In one example, the offset is selected from a set of candidate offsets which is configured by a higher-layer signal. In one example, the offset is a specific offset value for the first UL transmission configured by a higher-layer signal. In one example, the resource configuration is configured for the first UL transmission. In one example, the starting PRB is indicated for the first UL transmission. In one example, the starting PRB is indicated for the first UL transmission which is transmitted in the at least one special symbol. In one example, the starting PRB is specific for the at least one special symbol. In one example, the first UL transmission is a PUCCH or a PUSCH.

In one example, the communication device performs the first UL transmission (e.g., with the network) in the special symbol via a part of a resource for the first UL transmission within the at least one UL sub-band, in response to the resource overlapping with the at least one DL sub-band in the special symbol. The first UL transmission corresponds to the first priority index being the first value or the second value. That is, the first UL transmission is not performed via a remaining part of the resource for the first UL transmission within the at least one DL sub-band. In one example, if a 1st PRB of the resource for the first UL transmission overlaps with the at least one DL sub-band, the communication device determines a 1st PRB for performing the first UL transmission as a 1st PRB of the at least one UL sub-band. In one example, if a last PRB of the resource for the first UL transmission overlaps with the at least one DL sub-band, the communication device determines a last PRB for performing the first UL transmission as a last PRB of the at least one UL sub-band.

In one example, the communication device determines a UL resource for the first UL transmission in the special symbol according to a second resource configuration. In one example, the communication device determines the UL resource for the first UL transmission in the special symbol according to the second resource configuration and a third resource configuration. In one example, the communication device performs the first UL transmission (e.g., with the network) via the UL resource, after determining the UL resource for the first UL transmission in the special symbol according to the second resource configuration. In one example, the second resource configuration is associated with a fourth priority index being the first value. In one example, the third resource configuration is associated with a fifth priority index being the second value. In one example, the second resource configuration comprises a first list of a first plurality of UL resources for the special symbol. In one example, the first plurality of UL resources comprises (e.g., is) a first plurality of PUCCH resources. In one example, the third resource configuration comprises a second list of a second plurality of UL resources for the special symbol. In one example, the second plurality of UL resources comprises (e.g., is) a second plurality of PUCCH resources. In one example, each resource of the first plurality of UL resources and the second plurality of UL resources is configured with at least one of a resource ID and a payload size.

In one example, the communication device determines the UL resource for the first UL transmission in the special symbol according to a first payload size of the first UL transmission. In one example, the communication device performs the first UL transmission (e.g., with the network) via the UL resource, after determining the UL resource for the first UL transmission in the special symbol according to the first payload size of the first UL transmission. In one example, the UL resource is selected from a third plurality of UL resources. In one example, at least one UL resource of the third plurality of UL resources is associated with a second payload size. In one example, the first UL transmission comprises more than one UCI type. In one example, the communication device determines the UL resource for the first UL transmission in the special symbol according to the first payload size of the first UL transmission and a plurality of maximum payload sizes of the third plurality of UL resources. In one example, the plurality of maximum payload sizes are indicated by a third list for the third plurality of UL resources.

In one example, the communication device performs (and/or determines whether to perform) the first UL transmission according to multiple factors mentioned in the previous examples. For example, the communication device determines whether to perform the first UL transmission (e.g., with the network) according to the first priority index of the first PUCCH comprised in the first UL transmission and the triggering type of the indicator, but is not limited herein.

In one example, the communication device receives an indicator (different from the indicator in the process 30) for a fourth UL transmission in a BWP of the serving cell from the network. In one example, the communication device performs the fourth UL transmission (e.g., with the network) according to the first resource configuration, in response to the fourth UL transmission (e.g., fully) overlapping with a UL symbol (or at least one UL symbol) in the set of UL symbols. In one example, the communication device determines whether to perform the fourth UL transmission (e.g., with the network), in response to the fourth UL transmission (e.g., fully) overlapping with a special symbol (or at least one special symbol) in the set of special symbols in time. Examples for the fourth UL transmission can be referred to the previous examples for the first UL transmission, and are not narrated herein.

In one example, the communication device performs (and/or determines whether to perform) multiple UL transmissions according to different factors mentioned in the previous examples. For example, the communication device determines whether to perform the first UL transmission (e.g., with the network) according to the first priority index of the first PUCCH comprised in the first UL transmission, and determines whether to perform the fourth UL transmission (e.g., with the network) according to at least one of the ID of the communication device, the index of the slot which comprises the special symbol, and the at least one parameter, but is not limited herein.

In one example, the first value has a higher priority than the second value. In one example, the first value is "1", but is not limited herein. In one example, the second value is "0", but is not limited herein.

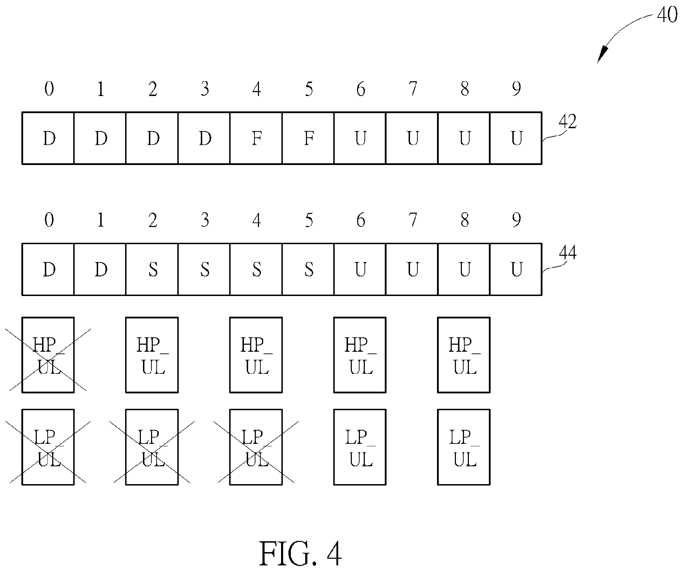

FIG. 4 is a schematic diagram of a communication 40 between a communication device and a network according to an example of the present invention. The communication device receives a UL-DL configuration and a special resource configuration from the network (not shown in FIG. 4). The UL-DL configuration and the special resource configuration may be the first configuration and the second configuration in the process 30, respectively, and are used to indicate types (e.g., directions) of slots 0-9 in a frame (e.g., a frame 42 or a frame 44). The UL-DL configuration indicates that the slots 0-3 are DL slots, the slots 4-5 are flexible slots, and the slots 6-9 are UL slots. The special resource configuration indicates that the slots 2-5 are special slots. A UL slot, a DL slot, a flexible slot and a special slot are represented as "U", "D", "F" and "S", respectively. The communication device determines the types of the slots 0-9 of the frame according to the UL-DL configuration. The determined frame can be represented as the frame 42. Then, the communication device re-determines the slots 2-5 as the special slots according to the special resource configuration. The re-determined frame can be represented as the frame 44.

In the slots 0-1 of the frame 44, the communication device does not perform a high priority (HP) UL transmission HP_UL (e.g., the first UL transmission comprising the first PUCCH with the first priority index being the first value) and a low priority (LP) UL transmission LP_UL (e.g., the first UL transmission comprising the first PUCCH with the first priority index being the second value) with the network, since the slots 0-1 of the frame 44 are the UL slots. In the slots 2-5 of the frame 44, the communication device may perform the HP UL transmission HP_UL with the network and disables performing the LP UL transmission LP_UL with the network, in response to the LP UL transmission LP_UL having a low priority. In the slots 6-9 of the frame 44, the communication device may perform the HP UL transmission HP_UL and/or the LP UL transmission LP_UL with the network, since the slots 6-9 are the UL slots. That is, the UL transmission may be performed in the slots 2-9 of the frame 44.

It should be noted that, the HP UL transmission HP_UL and the LP UL transmission LP_UL is not multiplexed in the slots 2-5 of the frame 44, even if the communication device is configured with a multiplexing of UCIs corresponding to the HP UL transmission HP_UL and the LP UL transmission LP_UL. In FIG. 4, the HP UL transmissions HP_UL and the LP UL transmissions LP_UL in the slots 1, 3, 5, 7 and 9 of the frame 44 are not shown for brevity.

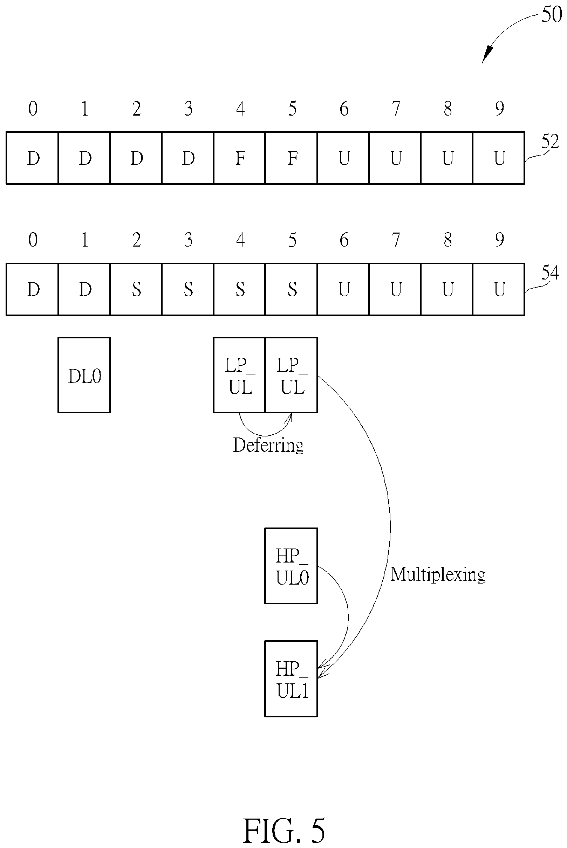

FIG. 5 is a schematic diagram of a communication 50 between a communication device and a network according to an example of the present invention. Each of a frame 52 and a frame 54 comprises slots 0-9. The frame 52 and the frame 54 can be referred to the frame 42 and the frame 44 in FIG. 4, and are not narrated herein for brevity. The communication device performs a DL reception DL0 comprising a PDSCH with the network in the slot 1 of the frame 54, and expects to perform a LP UL transmission LP_UL comprising a LP UCI corresponding to the PDSCH with the network in the slot 4 of the frame 54. The communication device disables performing the LP UL transmission LP_UL with the network in the slot 4 of the frame 54, e.g., in response to the LP UL transmission being dropped, and defers to transmit the LP UL transmission LP_UL in the slot 5 of the frame 54. The communication device disables performing the LP UL transmission LP_UL with the network in the slot 5 of the frame 54 in response to the LP UL transmission LP_UL overlapping with a HP UL transmission HP_UL0 in the slot 5 of the slot 54, and multiplexes the LP UCI in the LP UL transmission LP_UL and at least on HP UCI in the HP UL transmission HP_UL0 in a HP UL transmission HP_UL1. The communication device performs the HP UL transmission HP_UL1 with multiplexed UCIs with the network in the slot 5 of the frame 54.

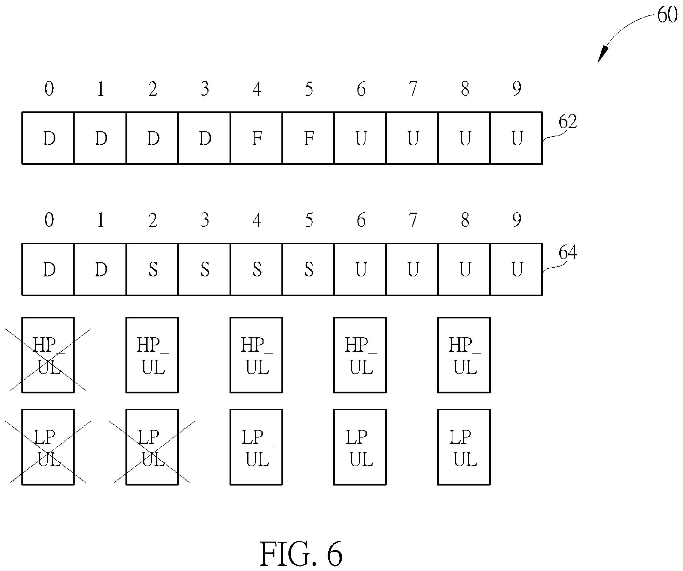

FIG. 6 is a schematic diagram of a communication 60 between a communication device and a network according to an example of the present invention. Each of a frame 62 and a frame 64 comprises slots 0-9. The frame 62 and the frame 64 can be referred to the frame 42 and the frame 44 in FIG. 4, and are not narrated herein for brevity. In the slots 0-1 of the frame 64, the communication device does not perform a HP UL transmission HP_UL and a LP UL transmission LP_UL with the network, since the slots 0-1 of the frame 64 are the UL slots. In the slots 2-3 of the frame 64, the communication device may perform the HP UL transmission HP_UL with the network and disables performing the LP UL transmission LP_UL with the network, in response to the slots 2-3 being configured as DL slots according to the UL-DL configuration. In the slots 4-5 of the frame 64, the communication device may perform the HP UL transmission HP_UL and/or the LP UL transmission LP_UL with the network, in response to the slots 4-5 being configured as flexible slots according to the UL-DL configuration and the flexible slots being indicated as the UL slots by a DCI. In the slots 6-9 of the frame 64, the communication device may perform the HP UL transmission HP_UL and/or the LP UL transmission LP_UL with the network, since the slots 6-9 of the frame 64 are the UL slots. That is, the UL transmission may be performed in the slots 2-9 of the frame 64.

In FIG. 6, the HP UL transmissions HP_UL and the LP UL transmissions LP_UL in the slots 1, 3, 5, 7 and 9 of the frame 64 are not shown for brevity.

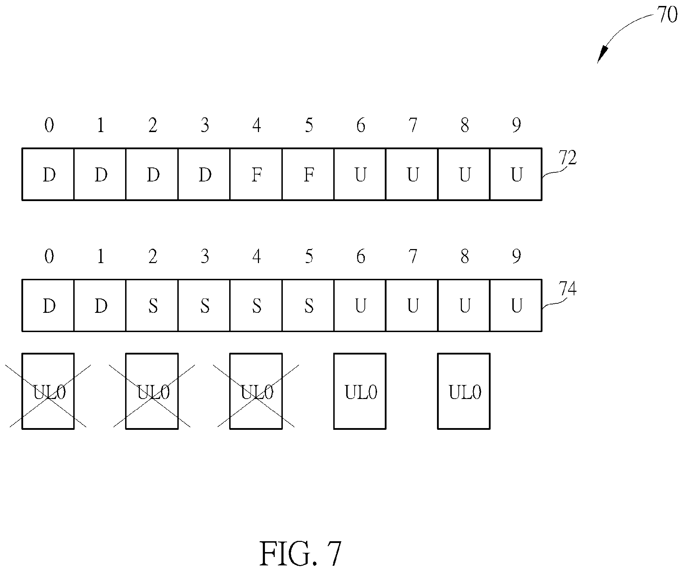

FIG. 7 is a schematic diagram of a communication 70 between a communication device and a network according to an example of the present invention. Each of a frame 72 and a frame 74 comprises slots 0-9. The frame 72 and the frame 74 can be referred to the frame 42 and the frame 44 in FIG. 4, and are not narrated herein for brevity. The UL transmission UL0 is a periodic transmission, and is scheduled/configured by a high-layer signal (e.g., a RRC signal). The communication device expects to transmit the UL transmission UL0 in the slots 0, 2, 4, 6 and 8. In the slot 0 of the frame 74, the communication device does not perform the UL transmission UL0 with the network, since the UL transmission UL0 is not performed in the DL slot. In the slots 2 and 4 of the frame 74, the communication device disables performing the UL transmission UL0 with the network, in response to the UL transmission UL0 being not scheduled/configured by a DCI. In the slots 6 and 8 of the frame 74, the communication device performs the UL transmission UL0 with the network, since the slots 6-9 are the UL slots. It should be noted that the communication device may multiplex a UCI(s) of the UL transmission UL0 in the slot(s) 2 and/or 4 of the frame 72 with a UCI(s) of a HP UL transmission(s) (not shown in FIG. 7), in response to the UL transmission UL0 in the slot(s) 2 and/or 4 of the frame 72 being scheduled/trigger by a DCI.

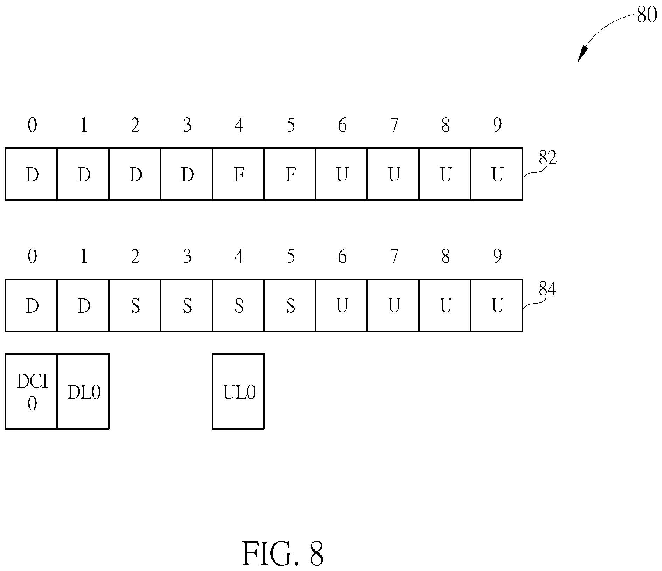

FIG. 8 is a schematic diagram of a communication 80 between a communication device and a network according to an example of the present invention. Each of a frame 82 and a frame 84 comprises slots 0-9. The frame 82 and the frame 84 can be referred to the frame 42 and the frame 44 in FIG. 4, and are not narrated herein for brevity. The communication device receives a DCI DCI0 from the network in the slot 0 of the frame 84. Then, the communication device performs a DL reception DL0 comprising a PDSCH with the network in the slot 1 of the frame 84 according to the DCI DCI0, and expects to perform a UL transmission UL0 comprising a UCI corresponding to the PDSCH with the network in the slot 4 of the frame 84 according to the DCI DCI0. The communication device performs the UL transmission UL0 in the slot 4 of the frame 84, in response to the UL transmission UL0 being scheduled by the DCI DCI0.

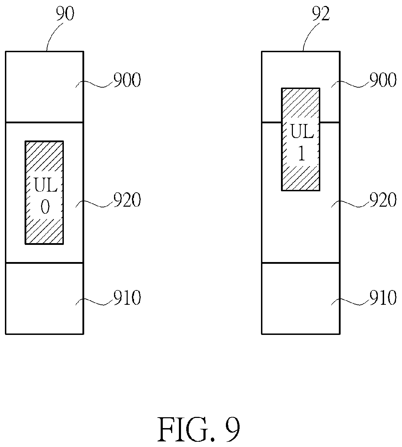

FIG. 9 is a schematic diagram of two special symbols 90 and 92 according to an example of the present invention. Each of the special symbols 90 and 92 comprises DL sub-bands 900 and 910 and a UL sub-band 920. A UL transmission UL0 is scheduled to be performed in the special symbol 90, and does not overlap with the DL sub-bands 900 and 910. Thus, a communication device may perform the UL transmission UL0 with the network in the special symbol 90. A UL transmission UL1 is scheduled to be performed in the special symbol 92, and overlaps with the DL sub-band 900. Thus, a communication device disables performing the UL transmission UL1 with the network in the special symbol 92. In one example, the term of "two special symbols 90 and 92" may be replaced by "two special slots 90 and 92".

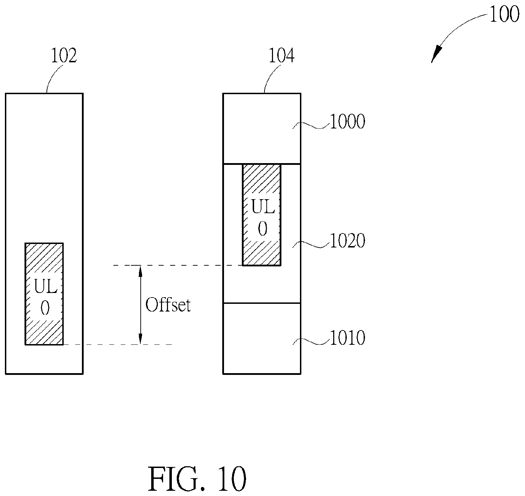

FIG. 10 is a schematic diagram of a communication 100 between a communication device and a network according to an example of the present invention. There are a UL symbol 102 and a special symbol 104 in FIG. 10. The special symbol 104 comprises DL sub-bands 1000 and 1010 and a UL sub-band 1020. The communication device receives an offset in a DCI or a higher-layer signal from the network (not shown in FIG. 10). The offset indicates a number of PRBs by which a UL transmission UL0 is shifted. The communication device may perform the UL transmission UL0 with the network in the UL symbol 102, and/or may perform the UL transmission UL0 with the network in the special symbol 104 by shifting the UL transmission UL0 according to the offset to avoid the UL transmission UL0 overlapping with the DL sub-band 1010 in the special symbol 104. In one example, the terms of "UL symbol 102" and "special symbol 104" may be replaced by "UL slot 102" and "special slot 104", respectively.

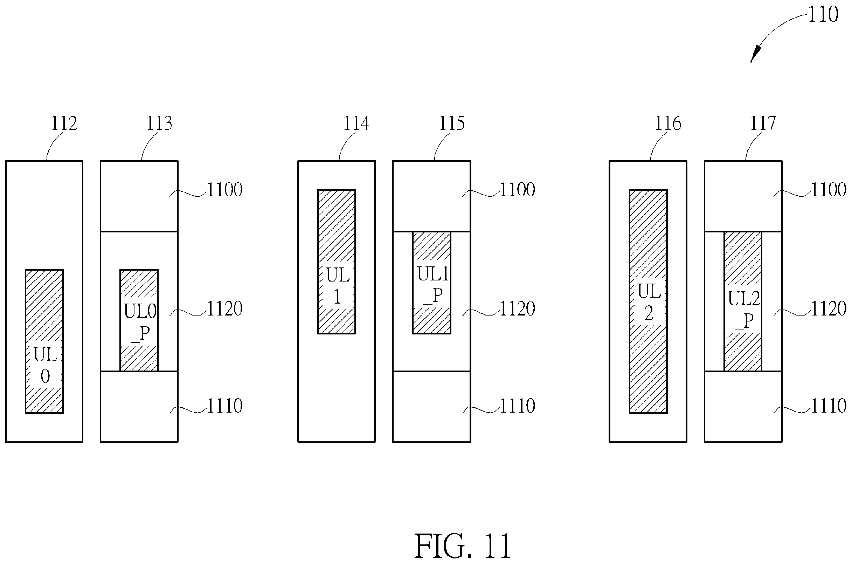

FIG. 11 is a schematic diagram of a communication 110 between a communication device and a network according to an example of the present invention. There are three UL symbols 112, 114 and 116 and three special symbols 113, 115 and 117 in FIG. 11. Each of the special symbols 113, 115 and 117 comprises DL sub-bands 1100 and 1110 and a UL sub-band 1120. In one example, the communication device may perform a UL transmission UL0 with the network in the UL symbol 112, and/or may perform a UL transmission UL0_P with the network in the special symbol 113. The UL transmission UL0_P is a part of the UL transmission UL0 which does not overlap with the DL sub-bands 1100 and 1110 in the special symbol 113. In one example, the communication device may perform a UL transmission UL1 with the network in the UL symbol 114, and/or may perform a UL transmission UL1_P with the network in the special symbol 115. The UL transmission UL1_P is a part of the UL transmission UL1 which does not overlap with the DL sub-bands 1100 and 1110 in the special symbol 115. In one example, the communication device may perform a UL transmission UL2 with the network in the UL symbol 116, and/or may perform a UL transmission UL2_P with the network in the special symbol 117. The UL transmission UL2_P is a part of the UL transmission UL2 which does not overlap with the DL sub-bands 1100 and 1110 in the special symbol 117. That is, the communication device drop a part of a UL transmission which overlaps with a DL sub-band(s) in a special symbol. In one example, the terms of "three UL symbols 112, 114 and 116" and "three special symbols 113, 115 and 117" may be replaced by "three UL slots 112, 114 and 116" and "three special slots 113, 115 and 117", respectively.

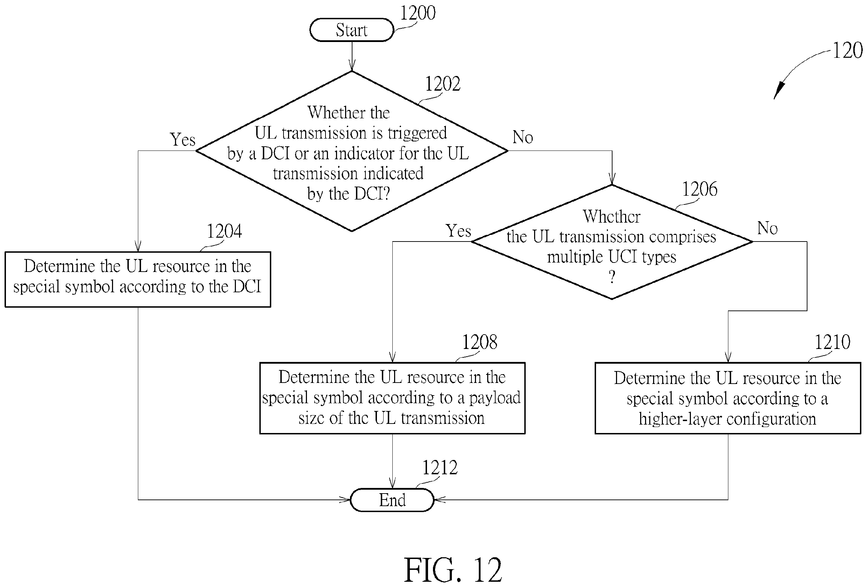

FIG. 12 is a flowchart of a process 120 according to an example of the present invention. The process 120 may be utilized in a communication device (e.g., a communication device 14 in FIG. 1 or the communication device 20 in FIG. 2), to determine a UL resource (e.g., at least one UL sub-band) in a special symbol for performing a UL transmission. The process 120 may be compiled into the program codes 214 and includes the following steps:

| | |
|---|---|
| Step 1200: | Start. |
| Step 1202: | Whether the UL transmission is triggered by a DCI or an indicator for the UL transmission indicated by the DCI? If yes, perform Step 1204. If no, perform Step 1206. |
| Step 1204: | Determine the UL resource in the special symbol according to the DCI, and perform Step 1212. |
| Step 1206: | Whether the UL transmission comprises multiple UCI types? If yes, perform Step 1208. If no, perform Step 1210. |
| Step 1208: | Determine the UL resource in the special symbol according to a payload size of the UL transmission, and perform Step 1212. |
| Step 1210: | Determine the UL resource in the special symbol according to a higher-layer configuration (e.g., a RRC configuration). |
| Step 1212: | End. |

In one example, the indicator in process 120 may be the indicator in the process 30. In one example, the UL transmission in process 120 may be the first UL transmission in the process 30 corresponding to the first priority index being the first value or the second value. In one example, the higher-layer configuration (e.g., the RRC configuration) in process 120 may be the third configuration in the examples in the process 30. In one example, the payload size of the UL transmission in process 120 may be the first payload size of the UL transmission in the examples in the process 30. In one example, the multiple UCI types comprises at least one of a HARQ-ACK, a CSI, a RS, a SRS, a L1-RSRP, a L1-SINR, a CQI, a PMI and a RI, but is not limited herein. In one example, the UL transmission is indicated with an offset for the special symbol by at least one of a DCI or a higher-layer configuration.

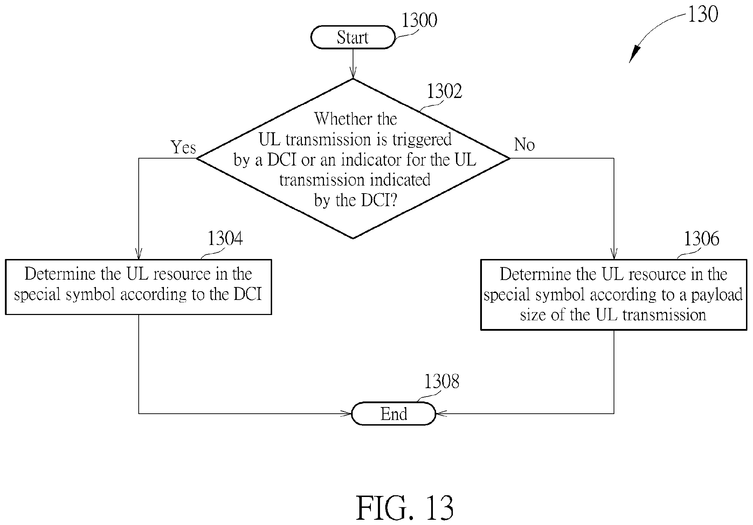

FIG. 13 is a flowchart of a process 130 according to an example of the present invention. The process 130 may be utilized in a communication device (e.g., a communication device 14 in FIG. 1 or the communication device 20 in FIG. 2), to determine a UL resource (e.g., at least one UL sub-band) in a special symbol for performing a UL transmission. The process 130 may be compiled into the program codes 214 and includes the following steps:

| | |
|---|---|
| Step 1300: | Start. |
| Step 1302: | Whether the UL transmission is triggered by a DCI or an indicator for the UL transmission indicated by the DCI? If yes, perform Step 1304. If no, perform Step 1306. |
| Step 1304: | Determine the UL resource in the special symbol according to the DCI, and perform Step 1308. |
| Step 1306: | Determine the UL resource in the special symbol according to a payload size of the UL transmission. |
| Step 1308: | End. |

In one example, the indicator in process 130 may be the indicator in the process 30. In one example, the UL transmission in process 130 may be the first UL transmission in the process 30 corresponding to the first priority index being the first value or the second value. In one example, the payload size of the UL transmission in process 130 may be the first payload size of the UL transmission in the examples in the process 30. In one example, the UL transmission is indicated with an offset for the special symbol by at least one of a DCI or a higher-layer configuration.

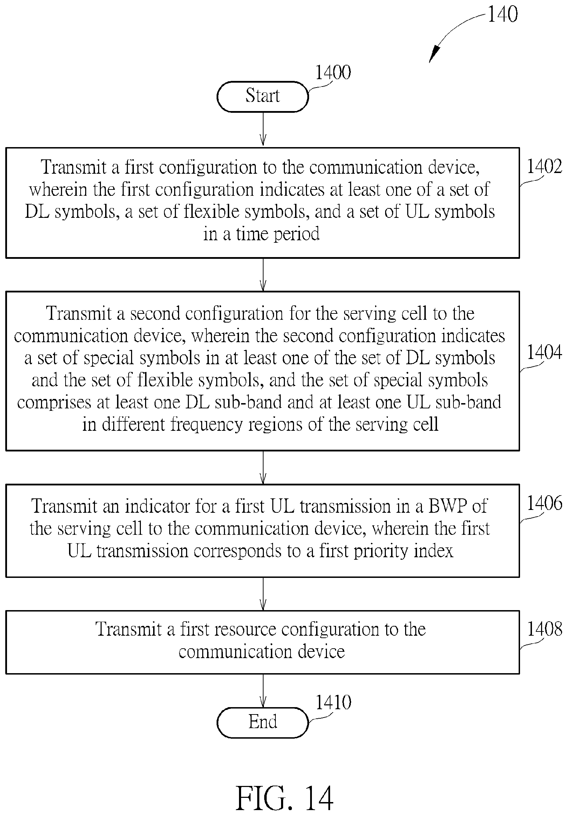

FIG. 14 is a flowchart of a process 140 according to an example of the present invention. The process 140 may be utilized in a communication device (e.g., a network 12 in FIG. 1 or the communication device 20 in FIG. 2), to handle a communication with a serving cell. The process 140 may be compiled into the program codes 214 and includes the following steps:

| Step 1400: | Start. |
| Step 1402: | Transmit a first configuration to the communication device, wherein the first configuration indicates at least one of a set of DL symbols, a set of flexible symbols, and a set of UL symbols in a time period. |
| Step 1404: | Transmit a second configuration for the serving cell to the communication device, wherein the second configuration indicates a set of special symbols in at least one of the set of DL symbols and the set of flexible symbols, and the set of special symbols comprises at least one DL sub-band and at least one UL sub-band in different frequency regions of the serving cell. |
| Step 1406: | Transmit an indicator for a first UL transmission in a BWP of the serving cell to the communication device, wherein the first UL transmission corresponds to a first priority index. |
| Step 1408: | Transmit a first resource configuration to the communication device. |
| Step 1410: | End. |

According to the process 140, the network transmits a first configuration (e.g., TDD-UL-DL-ConfigCommon) to the communication device. The first configuration indicates at least one of a set of DL symbols, a set of flexible symbols, and a set of UL symbols in a time period (e.g., at least one symbol or a radio frame). Then, the network transmits a second configuration for the serving cell to the communication device. The second configuration indicates a set of special symbols in at least one of the set of DL symbols and the set of flexible symbols, and the set of special symbols comprises at least one DL sub-band and at least one UL sub-band in different frequency regions of the serving cell. The network transmits an indicator for a first UL transmission in a BWP of the serving cell to the communication device. The first UL transmission corresponds to a first priority index. The network transmits a first resource configuration to the communication device. The first resource configuration enables the communication device to perform the first UL transmission (e.g., with the network), in response to the first UL transmission overlapping with a UL symbol in the set of UL symbols. That is, the special symbols comprise UL resources (e.g., the at least one UL sub-band), and the first UL transmission may be performed in the UL resources of the special symbols. Thus, a UL coverage is enhanced, and a transmission latency is reduced.

Realization of the process 140 is not limited to the above description. The following examples may be applied to realize the process 140.

In one example, the first UL transmission comprises at least one of a PUCCH, a PUSCH, a SRS, and a PRACH. In one example, the first UL transmission is indicated/configured/transmitted without at least one repetition. In one example, the indicator is received via a DCI or a radio resource control (RRC) signal. In one example, the first resource configuration is indicated by the indicator or a RRC signal. In one example, each sub-band of the at least one DL sub-band and the at least one UL sub-band comprises at least one PRB.

In one example, the BWP is a (e.g., contiguous) set of PRBs on a carrier. In one example, the communication device is configured with a plurality of BWPs (e.g., 4 BWPs). At a time point, a first BWP of the plurality of BWPs is active for UL and a second BWP of the plurality of BWPs is active for DL. In one example, one of the plurality of BWPs overlaps with the at least one DL sub-band and the at least one UL sub-band in at least one special symbol. In one example, one of the plurality of BWPs overlaps with the at least one DL sub-band or the at least one UL sub-band in the at least one special symbol. In one example, each BWP defined for a numerology has at least one of different subcarrier spacings, symbol durations, and CP lengths.

In one example, the network transmits a third configuration to the communication device. In one example, the third configuration comprises a first power information and a second power information for the first UL transmission. In one example, the first power information and the second power information correspond to the UL symbol and a special symbol in the set of special symbols, respectively. In one example, the first power information comprises at least one first parameter (e.g., closedLoopIndex, p0-PUCCH-Id and/or PathlossReferenceRS-Id). In one example, the second power information comprises at least one second parameter (e.g., closedLoopIndex, p0-PUCCH-Id and/or PathlossReferenceRS-Id).

In one example, the third configuration comprises a first spatial relation information and a second spatial relation information for the first UL transmission. In one example, the first spatial relation information and the second spatial relation information correspond to the UL symbol and the special symbol, respectively. In one example, the first spatial relation information comprises a first spatial relation information ID. In one example, the second spatial relation information comprises a second spatial relation information ID. In one example, the third configuration comprises a first code rate and a second code rate for the first UL transmission. In one example, the first code rate and the second code rate correspond to the UL symbol and the special symbol, respectively.

The examples in the process 30 may be applied to the process 140, and are not narrated herein for brevity.

The operation of "determine" described above may be replaced by the operation of "compute", "calculate", "obtain", "generate", "output, "use", "choose/select", "decide" or "is configured to". The operation of "detect" described above may be replaced by the operation of "monitor", "receive", "sense" or "obtain". The phrase of "according to" described above may be replaced by "in response to". The phrase of "associated with" described above may be replaced by "of" or "corresponding to". The term of "via" described above may be replaced by "on", "in" or "at". The term of "when" or "if' described above may be replaced by "in response to". The term of "special symbol" may be replaced by "sub-band non-overlapping full duplex (SBFD) symbol". The terms of "the set of DL symbols", "the set of flexible symbols", "the set of special symbols" and "the set of UL symbols" may be replaced by "the set of DL slots", "the set of flexible slots", "the set of special slots" and "the set of UL slots", respectively. The terms of "the DL symbol", "the flexible symbol", "the special symbol" and "the UL symbol" may be replaced by "the DL slot", "the flexible slot", "the special slot" and "the UL slot", respectively. The term of "DCI" may be replaced by "DCI format" or "PDCCH". The term of "the first UL transmission" may be replaced by "the second UL transmission" or "the third UL transmission".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present invention provide methods and a communication device for handling a communication with a serving cell. The communication device is configured with a set of special symbols for a BWP of the serving cell. The special symbols comprise both UL resources (e.g., the at least one UL sub-band) and DL resources (e.g., the at least one DL sub-band). UL transmissions may be performed in the UL resources of the special symbols, and DL receptions may be performed in the DL resources of the special symbols. Thus, a UL/DL coverage is enhanced, and a transmission latency is reduced.

## Claims

1. A method for handling a communication with a serving cell of a communication device (14, 20), **characterized by:**

   receiving a first configuration from a network, wherein the first configuration indicates at least one of a set of downlink, DL, symbols, a set of flexible symbols, and a set of uplink, UL, symbols in a time period (302);
   receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell (304);
   receiving an indicator for a first UL transmission in a bandwidth part, BWP, of the serving cell from the network, wherein the first UL transmission corresponds to a first priority index (306);
   performing the first UL transmission according to a first resource configuration, in response to the first UL transmission overlapping with a UL symbol in the set of UL symbols (308); and
   determining whether to perform the first UL transmission, in response to the first UL transmission overlapping with a special symbol in the set of special symbols in time (310).

2. The method of claim 1, **characterized in that** the first UL transmission fulfills at least one of following conditions:

   the first UL transmission comprises at least one of a physical UL control channel, PUCCH, a physical UL shared channel, PUSCH, a sounding reference signal, SRS, and a physical random access channel, PRACH; and

the first UL transmission is indicated without at least one repetition.

3. The method of claim 1, **characterized in that** the indicator is received via a DL control information, DCI, or a radio resource control, RRC, signal.

4. The method of claim 1, **characterized in that** the first resource configuration is indicated by the indicator or a RRC signal.

5. The method of claim 1, **characterized in that** the method further comprises:

   performing the first UL transmission in the special symbol, in response to the first UL transmission comprising a first PUCCH with the first priority index being a first value; and
   disabling performing the first UL transmission in the special symbol, in response to the first UL transmission comprising the first PUCCH with the first priority index being a second value.

6. The method of claim 1, **characterized in that** the method further comprises:
   disabling performing the first UL transmission in the special symbol, in response to the indicator being not indicated by the DCI.

7. The method of claim 1, **characterized in that** the method further comprises:
   performing the first UL transmission in the special symbol, in response to the first UL transmission not overlapping with the at least one DL sub-band.

8. The method of claim 1, **characterized in that** the method further comprises:
   disabling performing the first UL transmission in the special symbol, in response to the first UL transmission overlapping with the at least one DL sub-band.

9. The method of claim 1, **characterized in that** the method further comprises:
   receiving a third configuration from the network.

10. The method of claim 9, **characterized in that** the third configuration comprises a first power information and a second power information for the first UL transmission, and the first power information and the second power information correspond to the UL symbol and the special symbol, respectively.

11. The method of claim 10, **characterized in that** the method further comprises:
    determining a first transmission power for the first UL transmission according to the first power information, in response to the first UL transmission overlapping with the UL symbol.

12. The method of claim 10, **characterized in that** the method further comprises:
    determining a second transmission power for the first UL transmission according to the second power information, in response to the first UL transmission overlapping with the special symbol.

13. The method of claim 9, **characterized in that** the third configuration comprises a first spatial relation information and a second spatial relation information for the first UL transmission, and the first spatial relation information and the second spatial relation information correspond to the UL symbol and the special symbol, respectively.

14. The method of claim 13, **characterized in that** the method further comprises:
    determining a first spatial relation for the first UL transmission according to the first spatial relation information, in response to the first UL transmission overlapping with the UL symbol.

15. The method of claim 13, **characterized in that** the method further comprises:
    determining a second spatial relation for the first UL transmission according to the second spatial relation information, in response to the first UL transmission overlapping with the special symbol.

16. The method of claim 1, **characterized in that** the method further comprises:

    disabling performing the first UL transmission in the special symbol, in response to a second UL transmission overlapping with the first UL transmission in time;

wherein the first UL transmission comprises a first PUCCH with the first priority index being a second value, and the second UL transmission comprises a second PUCCH with a second priority index being a first value.

17. The method of claim 16, **characterized in that** the method further comprises:
performing the second UL transmission in the special symbol.

18. The method of claim 16, **characterized in that** the method further comprises:

multiplexing a first UCI of the first PUCCH and a second UCI of the second PUCCH in a third PUCCH with a third priority index being the first value; and
performing a third UL transmission, wherein the third UL transmission comprises the third PUCCH.

19. The method of claim 1, **characterized in that** the method further comprises:
disabling performing the first UL transmission in the special symbol, in response to the special symbol being configured as a DL symbol in the set of DL symbols according to the first configuration.

20. The method of claim 19, **characterized in that** the first UL transmission fulfills at least one of following conditions:

the first UL transmission corresponds to the first priority index being a second value;
the first UL transmission comprises a first PUCCH carrying a hybrid automatic repeat request acknowledgement, HARQ-ACK, for a semi persistent scheduling physical DL shared channel, SPS-PDSCH; and
the first UL transmission comprises the first PUCCH carrying a channel status information, CSI.

21. The method of claim 1, **characterized in that** the method further comprises:
performing the first UL transmission in the special symbol, in response to the special symbol being configured as a flexible symbol in the set of flexible symbols according to the first configuration.

22. The method of claim 21, **characterized in that** the special symbol is indicated as a UL resource by the network.

23. The method of claim 1, **characterized in that** the method further comprises:

performing the first UL transmission in the special symbol, in response to the first UL transmission comprising a first set of UCIs; and
disabling performing the first UL transmission in the special symbol, in response to the first UL transmission comprising a second set of UCIs.

24. The method of claim 23, **characterized in that** the first set of UCIs comprises at least one of a HARQ-ACK and a scheduling request, SR, or the second set of UCIs comprises a CSI.

25. The method of claim 1, **characterized in that** the method further comprises:

determining a UL resource according to at least one of the first resource configuration and a starting physical resource block, PRB; and
performing the first UL transmission on the UL resource in the special symbol;
wherein a first number of PRB of the UL resource is the same as a second number of PRB for the first UL transmission overlapping with the UL symbol in the set of UL symbols;
wherein the starting PRB is determined according to at least one of an offset, the indicator, the first resource configuration, a DCI, and a higher-layer signal, and the offset indicates a set of frequency domain resource.

26. The method of claim 1, **characterized in that** the method further comprises:
performing the first UL transmission in the special symbol via a part of a resource for the first UL transmission within the at least one UL sub-band, in response to the resource overlapping with the at least one DL sub-band in the special symbol.

27. The method of claim 1, **characterized in that** the method further comprises:

determining a UL resource for the first UL transmission in the special symbol according to a first payload size of the first UL transmission; and

performing the first UL transmission via the UL resource;
wherein the UL resource is selected from a plurality of UL resources.

28. The method of claim 27, **characterized in that** at least one UL resource of the plurality of UL resources is associated with a second payload size.

29. The method of claim 27, **characterized in that** the first UL transmission comprises more than one UCI type.

30. A communication device (14, 20) for handling a communication with a serving cell, **characterized by:**

at least one storage device; and
at least one processing circuit, coupled to the at least one storage device, wherein the at least one storage device is configured to store instructions, and the at least one processing circuit is configured to execute the instructions of:
receiving a first configuration from a network, wherein the first configuration indicates at least one of a set of downlink, DL, symbols, a set of flexible symbols, and a set of uplink, UL, symbols in a time period (302);
receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell (304);
receiving an indicator for a first UL transmission in a bandwidth part, BWP, of the serving cell from the network, wherein the first UL transmission corresponds to a first priority index (306);
performing the first UL transmission according to a first resource configuration, in response to the first UL transmission overlapping with a UL symbol in the set of UL symbols (308); and
determining whether to perform the first UL transmission, in response to the first UL transmission overlapping with a special symbol in the set of special symbols in time (310).

31. A method for a network (12, 20) handling a communication with a communication device (14, 20), **characterized by:**

transmitting a first configuration to the communication device, wherein the first configuration indicates at least one of a set of downlink, DL, symbols, a set of flexible symbols, and a set of uplink, UL, symbols in a time period (1402);
transmitting a second configuration for the serving cell to the communication device, wherein the second configuration indicates a set of special symbols in at least one of the set of DL symbols and the set of flexible symbols, and the set of special symbols comprises at least one DL sub-band and at least one UL sub-band in different frequency regions of the serving cell (1404);
transmitting an indicator for a first UL transmission in a bandwidth part, BWP, of the serving cell to the communication device, wherein the first UL transmission corresponds to a first priority index (1406); and
transmitting a first resource configuration to the communication device (1408);
wherein the first resource configuration enables the communication device to perform the first UL transmission, in response to the first UL transmission overlapping with a UL symbol in the set of UL symbols.

10

12

Network

| Communication device | ... | Communication device | ... | Communication device |

14

14

14

FIG. 1

FIG. 2

30

300

Start

Receive a first configuration from a network, wherein the first configuration indicates at least one of a set of DL symbols, a set of flexible symbols, and a set of UL symbols in a time period — 302

Receive a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell — 304

Receive an indicator for a first UL transmission in a BWP of the serving cell from the network, wherein the first UL transmission corresponds to a first priority index — 306

Perform the first UL transmission according to a first resource configuration, in response to the first UL transmission overlapping with a UL symbol in the set of UL symbols — 308

Determine whether to perform the first UL transmission, in response to the first UL transmission overlapping with a special symbol in the set of special symbols in time — 310

End — 312

# FIG. 3

EP 4 535 706 A1

| 0 | 1 | 2 | 3 | 4 | 5 | 6 | 7 | 8 | 9 |
|---|---|---|---|---|---|---|---|---|---|
| D | D | D | D | F | F | U | U | U | U |

42

| 0 | 1 | 2 | 3 | 4 | 5 | 6 | 7 | 8 | 9 |
|---|---|---|---|---|---|---|---|---|---|
| D | D | S | S | S | S | U | U | U | U |

44

| HP_UL | HP_UL | HP_UL | HP_UL | HP_UL |
| LP_UL | LP_UL | LP_UL | LP_UL | LP_UL |

FIG. 4

50

| 0 | 1 | 2 | 3 | 4 | 5 | 6 | 7 | 8 | 9 | |
|---|---|---|---|---|---|---|---|---|---|---|
| D | D | D | D | F | F | U | U | U | U | 52 |

| 0 | 1 | 2 | 3 | 4 | 5 | 6 | 7 | 8 | 9 | |
|---|---|---|---|---|---|---|---|---|---|---|
| D | D | S | S | S | S | U | U | U | U | 54 |

DL0

LP_UL | LP_UL

Deferring

HP_UL0

Multiplexing

HP_UL1

FIG. 5

60

| 0 | 1 | 2 | 3 | 4 | 5 | 6 | 7 | 8 | 9 |
|---|---|---|---|---|---|---|---|---|---|
| D | D | D | D | F | F | U | U | U | U |

62

| 0 | 1 | 2 | 3 | 4 | 5 | 6 | 7 | 8 | 9 |
|---|---|---|---|---|---|---|---|---|---|
| D | D | S | S | S | S | U | U | U | U |

64

| HP_UL | HP_UL | HP_UL | HP_UL | HP_UL |
|---|---|---|---|---|
| LP_UL | LP_UL | LP_UL | LP_UL | LP_UL |

FIG. 6

EP 4 535 706 A1

70

| 0 | 1 | 2 | 3 | 4 | 5 | 6 | 7 | 8 | 9 |
|---|---|---|---|---|---|---|---|---|---|
| D | D | D | D | F | F | U | U | U | U |

72

| 0 | 1 | 2 | 3 | 4 | 5 | 6 | 7 | 8 | 9 |
|---|---|---|---|---|---|---|---|---|---|
| D | D | S | S | S | S | U | U | U | U |

74

| UL0 | UL0 | UL0 | UL0 | UL0 |
|-----|-----|-----|-----|-----|

FIG. 7

EP 4 535 706 A1

80

| 0 | 1 | 2 | 3 | 4 | 5 | 6 | 7 | 8 | 9 |
|---|---|---|---|---|---|---|---|---|---|
| D | D | D | D | F | F | U | U | U | U |

82

| 0 | 1 | 2 | 3 | 4 | 5 | 6 | 7 | 8 | 9 |
|---|---|---|---|---|---|---|---|---|---|
| D | D | S | S | S | S | U | U | U | U |

84

| DCI 0 | DL0 | | UL0 |
|-------|-----|--|-----|

FIG. 8

FIG. 9

FIG. 10

FIG. 11

EP 4 535 706 A1

Start — 1200

120

Whether the
UL transmission is triggered
by a DCI or an indicator for the UL
transmission indicated
by the DCI? — 1202

Yes

No

Determine the UL resource in the
special symbol according to the DCI — 1204

Whether
the UL transmission comprises
multiple UCI types
? — 1206

Yes

No

Determine the UL resource in the
special symbol according to a payload
size of the UL transmission — 1208

Determine the UL resource in the
special symbol according to a
higher-layer configuration — 1210

End — 1212

FIG. 12

1300

Start

1302

Whether the
UL transmission is triggered
Yes    by a DCI or an indicator for the UL    No
transmission indicated
by the DCI?

130

1304

Determine the UL resource in the
special symbol according to the DCI

1306

Determine the UL resource in the
special symbol according to a payload
size of the UL transmission

1308

End

FIG. 13

140

1400

Start

Transmit a first configuration to the communication device, wherein the first configuration indicates at least one of a set of DL symbols, a set of flexible symbols, and a set of UL symbols in a time period — 1402

Transmit a second configuration for the serving cell to the communication device, wherein the second configuration indicates a set of special symbols in at least one of the set of DL symbols and the set of flexible symbols, and the set of special symbols comprises at least one DL sub-band and at least one UL sub-band in different frequency regions of the serving cell — 1404

Transmit an indicator for a first UL transmission in a BWP of the serving cell to the communication device, wherein the first UL transmission corresponds to a first priority index — 1406

Transmit a first resource configuration to the communication device — 1408

End — 1410

FIG. 14

| Europäisches Patentamt / European Patent Office / Office européen des brevets | **EUROPEAN SEARCH REPORT** | Application Number EP 24 20 3371 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEI WANG ET AL: "Discussion on subband non-overlapping full duplex", 3GPP DRAFT; R1-2307382; TYPE DISCUSSION; FS_NR_DUPLEX_EVO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, FR; 20230821 - 20230825 11 August 2023 (2023-08-11), XP052436607, Retrieved from the Internet: URL:https://www.3gpp.org/ftp/TSG_RAN/WG1_RL1/TSGR1_114/Docs/R1-2307382.zip R1-2307382 Discussion on subband non-overlapping full duplex-final.docx [retrieved on 2023-08-11] * sections 1-3 * | 1-31 | INV. H04L5/00 H04L5/14 |
| | ----- | | |
| A | NTT DOCOMO ET AL: "Discussion on subband non-overlapping full duplex", 3GPP DRAFT; R1-2209902, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20221010 - 20221019 30 September 2022 (2022-09-30), XP052259375, Retrieved from the Internet: URL:https://ftp.3gpp.org/tsg_ran/WG1_RL1/TSGR1_110b-e/Docs/R1-2209902.zip R1-2209902.docx [retrieved on 2022-09-30] * sections 1-3 * | 1-31 | TECHNICAL FIELDS SEARCHED (IPC) H04L |
| | ----- | | |

-/--

The present search report has been drawn up for all claims

| Place of search | Date of completion of the search | Examiner |
|---|---|---|
| The Hague | 20 January 2025 | Barrientos Lezcano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 24 20 3371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATRICK MERIAS ET AL: "Summary #2 of subband non-overlapping full duplex", 3GPP DRAFT; R1-2301934; TYPE DISCUSSION; FS_NR_DUPLEX_EVO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20230227 - 20230303 2 March 2023 (2023-03-02), XP052250889, Retrieved from the Internet: URL:https://www.3gpp.org/ftp/TSG_RAN/WG1_R L1/TSGR1_112/Docs/R1-2301934.zip R1-2301934.docx [retrieved on 2023-03-02] * sections 1-7 * ----- | 1-31 | |

TECHNICAL FIELDS
SEARCHED (IPC)

The present search report has been drawn up for all claims

| Place of search | Date of completion of the search | Examiner |
|---|---|---|
| The Hague | 20 January 2025 | Barrientos Lezcano |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................
& : member of the same patent family, corresponding
   document

EPO FORM 1503 03.82 (P04C01)